(19) Europäisches Patentamt
European Patent Office
Office européen des brevets

(11) **EP 3 282 655 A1**

(12) **EUROPEAN PATENT APPLICATION**

(43) Date of publication:
**14.02.2018 Bulletin 2018/07**

(51) Int Cl.:
*H04L 25/03* (2006.01)       *H04L 27/26* (2006.01)

(21) Application number: **16183627.5**

(22) Date of filing: **10.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NTT DOCOMO, INC.**
**Chiyoda-ku**
**Tokyo (JP)**

(72) Inventors:
• **Kusume, Katsutoshi**
  **80687 Munich (DE)**
• **Weitkemper, Petra**
  **80687 Munich (DE)**
• **Bazzi, Jamal**
  **80687 Munich (DE)**
• **Iwamura, Mikio**
  **80687 Munich (DE)**

(74) Representative: **Betten & Resch**
  **Patent- und Rechtsanwälte PartGmbB**
  **Maximiliansplatz 14**
  **80333 München (DE)**

(54) **SUPPRESSION OF OUT OF BAND EMISSIONS USING CANCELLATION SUBCARRIERS IN GUARD BAND**

(57)     A method method for transmitting a signal in a communication system, wherein
- said signal is composed of first symbols transmitted on a transmission bandwidth and second symbols transmitted on one or more guard bandwidths,
- said guard bandwidths are configured at frequencies below and/or above said transmission bandwidth,
- said signal to be transmitted is to fulfill predefined requirements set for said transmission bandwidth, said guard bandwidth, and out of band,
- said predefined requirements are defined as thresholds of maximum and/or minimum values on power density in the frequency and/or time domain,
- said values are the same for said transmission bandwidth and said guard bandwidths,
- said first symbols include data and/or pilot symbols, and
- said second symbols are composed of arbitrary symbols and/or no symbols, such that said signal does not exceed said thresholds.

Fig. 5

This approach can be applied to any multicarrier transmission (e.g. OFDM, F-OFDM, W-OFDM)

## Description

## FIELD OF THE INVENTION

The present invention is directed to a method and an apparatus for transmitting a multicarrier signal.

## BACKGROUND OF THE INVENTION

Orthogonal Frequency Division Multiplexing, OFDM, shows desirable properties in a multiuser scenario as long as all parameters like subcarrier, SC, spacing and symbol duration are constant in the system and the reception of the signal from all users is fully synchronized. In LTE this synchronous reception is achieved by the so-called timing advance which requires a significant amount of signalling. For future applications this overhead for the synchronization may be too inefficient, e.g. for machine-type communication, MTC, traffic, and therefore perfect synchronization may not be guaranteed. Furthermore, the diverse kinds of applications that should be supported by 5G within one band will have very different requirements and one fixed SC spacing may not be efficient as well. In such cases, OFDM is no longer orthogonal and the high out- of-band, OOB, radiation introduces significant interference to the neighbouring user. So-called guard SC between the users can reduce the interference, but due to the spectrum of OFDM a large amount of guard SCs would be needed leading to dramatically reduced efficiency.

Therefore, OFDM may not best address the above described requirements and new waveforms may be needed. One alternative is filtered OFDM, f-OFDM, where the entire system band is divided in several subbands and each subband is filtered individually to minimize the OOB emission. Another alternative is windowed OFDM, W-OFDM, where a window is applied to the signal in the time domain in order to reduce the side lobes of each subcarrier and consequently also the OOB emission.

Although the following description focusses on f-OFDM, the same idea can be applied to other techniques like W-OFDM.

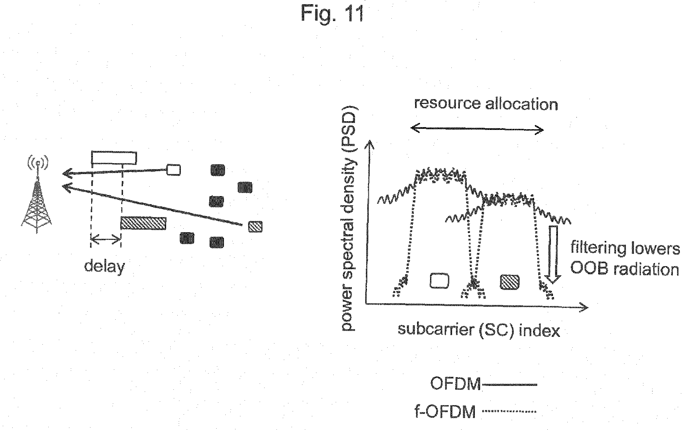

Figure 11 illustrates different waveforms of OFDM vs. f-OFDM transmission, wherein the filtering significantly reduces the OOB radiation resulting in less possible interference with transmissions in subbands of neighbouring users.

But even with filtering or windowing, the OOB emission may still be too large and combinations of those schemes with guard bands are reported in prior art. Nevertheless, in all cases where guard bands are used, they should be kept at the minimum as they reduce the spectral efficiency.

Recently, some signal pre-distortion (precoding) techniques have been proposed for sidelobe suppression which could also be used together with filtering or windowing. These techniques can be classified into two classes:

1) pre-distorting data symbols to minimise their combined out-of-band emission

Such an approach is e.g. described in Xiaojing Huang, Jian A. Zhang, and Y. Jay Guo, "Out-of-Band Emission Reduction and a Unified Framework for Precoded OFDM", IEEE Communications Magazine • June 2015, or in US 8,798, 558 B2.

2) cancelling out-of-band emission from data subcarriers by optimising the signals at reserved subcarriers

Such an approach is e.g. described in DE 10 2006 017 636 B4 or in Brandes et al., Reduction of Out-of-Band Radiation in OFDM Systems by Insertion of Cancellation Carriers, IEEE COMMUNICATIONS LETTERS, VOL. 10, NO. 6, JUNE 2006.

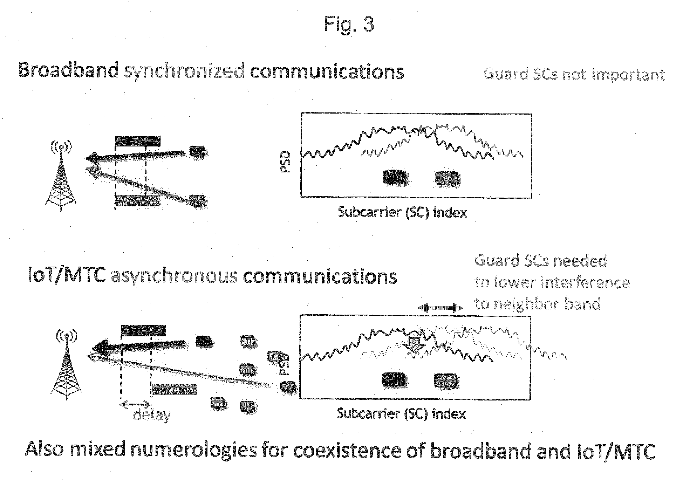

Class 1 techniques optimise a precoding matrix via some cost function of the OOB emission. These techniques have the advantage of maintaining the receiver SNR by using an orthogonal precoding matrix. However, their computational complexity is proportional to the square of the number of subcarriers in the band of interest and is therefore impractical for most applications. Furthermore, the required large matrix multiplication for precoding is not only applied at the transmitter side, but also the inverse operation in terms of a large matrix multiplication at the receiver side, so the complexity is increased at Tx and Rx side. Moreover, the resulting signals tend to have very high amplitudes, as shown, e.g., in Figure 3, in Huang et al.,. This could waste transmit power, result in high PAPR that impacts coverage, and it could also negatively impact the transmitter characteristics that may violate some requirements such as spectrum emission mask according to specification, e.g. 3GPP TS 36.101.

Class 2 techniques can achieve good sidelobe suppression, but lead to signal-to-noise power ratio (SNR) degradation in the receiver as power is wasted at the reserved subcarriers. The main idea of this approach is a better utilization of the guard bands. Moreover, the approach as disclosed in Brandes et al. also has other disadvantages. The complexity of this approach, which is proportional to the number of points to be cancelled in the sidelobe, can become quite high for large suppression, because a matrix inversion of a possibly large matrix is needed in addition to some matrix multiplications. If a zero-forcing design is chosen for the precoding, the power on the cancellation subcarrier will become very high in some cases. If the power should be limited to a certain value, the computational complexity gets even larger or an even more complex optimization is needed.

E.g. the approach disclosed in Brandes et al., proposes to use guard subcarriers (in Brandes et a. they are called "cancellation carriers), to suppress OOB interference. The approach disclosed therein, however, has the significant disadvantage of very high computational complexity, since it is based on solving an optimization problem based on freely choosing weighting coefficients to be modulated in the guard carriers. This involves complex matrix operations and in case of Brandes is e.g. solved using Lagrange multipliers and singular value decomposition.

Although the approach disclosed in Brandes et al., sets a power constraint for the guard band optimization, this will degrade the effectiveness of lowering OOB interference.

It is noted that the both prior art approaches disclosed in Huang et al., and in Brandes et al., do not guarantee that the resulting transmit signals using the computed guard subcarriers satisfy the transmitter characteristics requirements such as spectrum emission mask according to specification, e.g. 3GPP TS 36.101, since the prior arts do not explicitly set the constraints on the transmitter characteristics requirements. Moreover, with these prior art approaches some requirements cannot simply be applied to the guard subcarriers such as transmit signal quality measured by, e.g., modulation quality and cannot be easily tested since these approaches result in any transmission signals with arbitrarily amplitudes and phases which are not from particular modulation symbols.

It is therefore an object of the present invention to substantially overcome, or at least ameliorate, one or more disadvantages of existing arrangements.

SUMMARY OF THE INVENTION

According to one embodiment there is provided a method for transmitting a signal in a communication system having a configured channel bandwidth,

- wherein a transmission bandwidth and one or more guard bands are said signal is composed of first symbols transmitted on a transmission bandwidth and second symbols transmitted on one or more guard bandwidths,

- said guard bandwidths are configured at frequencies below and/or above said transmission bandwidth,

- said signal to be transmitted is to fulfill predefined requirements set for said transmission bandwidth, said guard bandwidth, and out of band,

- said predefined requirements are defined as thresholds of maximum and/or minimum values on power density in the frequency and/or time domain,

- said values are the same for said transmission bandwidth and said guard bandwidths,

- said first symbols include data and/or pilot symbols, and

- said second symbols are composed of arbitrary symbols and/or no symbols, such that said signal does not exceed said thresholds.

By applying the same requirements as threshold vaules for transmitter bandwidth as well as for guard bandwidth, the requirements for the channel bandwidth can be made consistent. Furthermore, the guard bandwidth can be utilized to lower the OOB radiation by transmitting the second symbols or no symbols in the guard bandwidth as long as the requirements are met.

According to one embodiment said predefined requirements are out of band emission requirements for said signal to be transmitted and are defined as the threshold values of power density.

In this manner a desired out of band emission characteristics can be achieved.

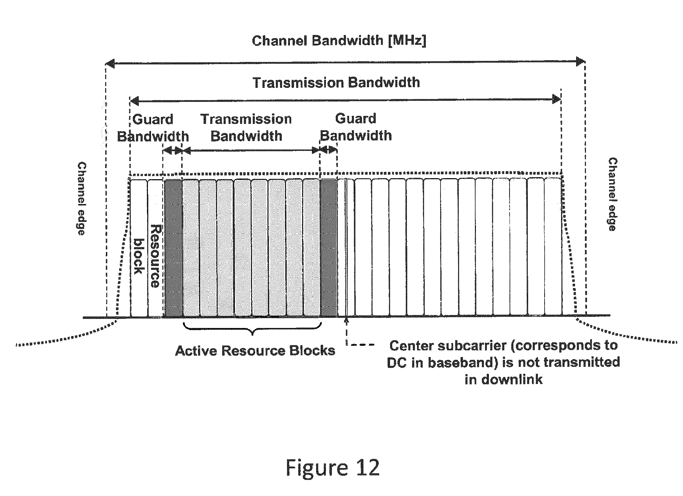

It should be noted here that the "out of band emission" refers to the out of band emission inside the channel bandwith but outside the transmission bandwidth as e.g. illustrated in Fig. 12. This is e.g. different from LTE, where the spectrum mask defines a emission limit limit outside the channel bandwidth.

According to one embodiment a spectrum mask is defined over the transmission bandwith, the guard bandwidth and the out of band, which sets a maximum limit for the power spectrum density at the frequencies of the transmission bandwith, at the frequencies of the guard bandwith, and at the frequencies of the out of band.

In this manner the transmission requirements can be set for the guard bandwidth and for the transmision bandwidth with respect to a spectral emission mask requirement.

According to one embodiment there is provided method for transmitting a multicarrier signal, wherein a frequency band is allocated for said multicarrier signal, and one or more guard bands are allocated at frequencies below and/or above said frequency band allocated for said multicarrier signal,

- wherein one or more guard subcarriers are respectively allocated to said one or more guard bands, and

- wherein signal values are modulated onto said one or more guard subcarriers and transmitted over said guard band to lower the out of band emission of said multicarrier signal outside said frequency band allocated to said multicarrier signal,

- wherein said signal values transmitted over said guard subcarriers of said one or more guards band are chosen out of a limited set of discrete values provided for each of said one or more guard bands, respectively; and said method further comprising:

- calculating for each value of said limited set of discrete values or, if said guard band comprises more than one subcarrier, for each combination of values of said limited set of discrete values provided for a certain guard band the resulting out of band emission when transmitting a certain set of data values over said multicarrier signal; and

- choosing the value or combination of values among said limited set of discrete values for which said out of band emission of said multicarrier signal reaches its minimum.

By providing a limited set of discrete values for the guard band (or the guard bands) and by calculating the out of band emission for each of them it becomes possible to reduce the out of band emission with very low complexity just by choosing the value (or the combination of values) among the predefined for which the out of band emission reaches the minimum amount.

According to one embodiment the limited set of discrete values is chosen such that the power density of said guard band shall not exceed a certain threshold.

This ensures a certain maximum value for the PSD of the out of band.

According to one embodiment the threshold values of power density for out of band are signaled from network to UE.

In this manner the UE is aware of the characteristics.

According to one embodiment the limited set of discrete values comprises one of the following:

a set comprising the modulation alphabet used for data symbols;

a set of two discrete values or less;

a set of four discrete values or less;

a set of eight discrete values or less;

a set of sixteen discrete values or less;

a set of 32 discrete values or less;

a set of 64 discrete values or less;

a set of 128 discrete values or less;

a set of 256 discrete values or less;

a set of 512 discrete values or less;

a set of 1024 discrete values or less;

the foregoing sets including the value of zero.

These are suitable implementations for the discrete values.

According to one embodiment the method further comprises:

calculating the out of band emission as the value of the power spectral density, and
choosing the value or values among said limited set of discrete values for which the power spectral density of the out of band emission is minimized.

This enables an optimization of the out of band emission.

According to one embodiment only a part of the subcarriers in the neighboring band are used for calculating the resulting power spectral density of the out of band emission for a given value or combination of values for the guard carriers.

This makes it possible to limit the complexity even further while achieving an out of band emission reduction.

According to one embodiment the method further comprises:

Signaling the number of guard subcarriers from the transmitter to the UE.

In this manner the UE is aware of the number of guard subcarriers.

According to one embodiment there is provided an apparatus for transmitting a signal in a communication system, wherein

- said signal is composed of first symbols transmitted on a transmission bandwidth and second symbols transmitted on one or more guard bandwidths,

- said guard bandwidths are configured at frequencies below and/or above said transmission bandwidth,

- said apparatus is configured such that signal to be transmitted is to fulfill predefined requirements set for said transmission bandwidth, said guard bandwidth, and out of band,

- said predefined requirements are defined as thresholds of maximum and/or minimum values on power density in the frequency and/or time domain,

- said values are the same for said transmission bandwidth and said guard bandwidths,

- said first symbols include data and/or pilot symbols, and

- said second symbols are composed of arbitrary symbols and/or no symbols, such that said signal does not exceed said thresholds.

According to one embodiment the apparatus is for transmitting a multicarrier signal, comprising:

- a frequency allocator for allocating a frequency band for said multicarrier signal, and for allocating one or more guard bands at frequencies below and/or above said frequency band allocated for said multicarrier signal,

- wherein one or more guard subcarriers are respectively allocated to said one or more guard bands, and

- a modulator and transmitter for modulating signal values onto said one or more guard subcarriers and transmitting them over said guard band to lower the out of band emission of said multicarrier signal outside said frequency band allocated to said multicarrier signal, and

- a processor for

- choosing said signal values transmitted over said guard subcarriers of said one or more guards band out of a limited set of discrete values provided for each of said one or more guard bands, respectively; and said processor further being adapted for:

  - calculating for each value of said limited set of discrete values or, if said guard band comprises more than one subcarrier, for each combination of values of said limited set of discrete values provided for a certain guard band the resulting out of band emission when transmitting a certain set of data values over said multicarrier signal; and

  - choosing the value or combination of values among said limited set of discrete values for which said out of band emission of said multicarrier signal reaches its minimum.

According to one embodiment the apparatus further comprises means or modules for carrying our a method according to one of the embodiments.

DESCRIPTION OF THE DRAWINGS

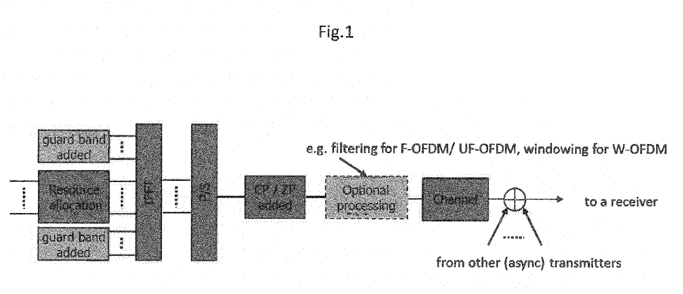

Figure 1 shows a schematic overview of the OFDM transmission scheme including guard bands and optional processing as windowing or filtering.

Figure 2 shows the frequency domain location of transmissions on neighboring frequency resources and a guard band between the two transmissions.

Figure 3 shows an example of synchronous and asynchronous access to transmission resources by two out of several MTC devices including guard band in the case of asynchronous transmission.

Figs. 4 to 10 illustrate various embodiments of the invention for reducing out of band emission

Figure 11 shows an example of asynchronous access to transmission resources by two out of several MTC devices.

Figure 12 shows an example definition of channel bandwidth, transmission bandwidth, and guard bandwidth.

DETAILED DESCRIPTION

According to one embodiment there is provided method for transmitting a signal in a communication system having a configured channel bandwidt wherein a transmission bandwidth and one or more guard bands are configured within said channel bandwidth. The guard bands are configured at frequencies below and/or above said transmission bandwidth. The signal to be transmitted is to fulfill predefined requirements, and said predefined requirements are defined as thresholds of maximum and/or minimum values in the frequency and/or time domain. The predefined requirements are defined for the transmission bandwidth for a specific service or user, and the requirements for said transmission bandwidth also apply to the guard bandwidth. Data symbols are carried by said transmission bandwidth, and symbols or no symbol are selected to be carried by said guard bands such that said signal does not exceed said thresholds.

According to such an embodiment there is provided method, which may be used for for transmitting a multicarrier signal for a configured channel bandwidth, which comprises a transmission bandwidth and one or more guard bandwidth. The guard bandwidth is configured at frequencies below and/or above the transmission bandwidth, which carries data symbols and possibly also other symbols such as pilots. Fig. 12 shows exemplarily such a configuration. For the transmission bandwidth according to one embodiment there are a set of transmitter characteristics requirements defined according to a specification, e.g. 3GPP TS 36.101 that also apply to the guard bandwidth. The guard bandwidth can be utilized to lower the OOB radiation as long as the transmitter characteristics requirements are met, which allows various implementations.

The constraint of the proposed approach is stricter than the prior art, since the prior arts do not explicitly set constraints on the set of transmitter characteristics requirements. For example, spectral emission mask requirement can be defined as one of the transmitter characteristics requirements by the proposed approach whereas the prior art approaches only aim at minimizing OOB emission, and no guarantee to satisfy the requirement. Moreover, with the prior art approaches some requirements cannot simply be applied to the guard subcarriers such as transmit signal quality measured by, e.g., modulation quality and cannot be easily tested since these approaches result in any transmission signals with arbitrarily amplitudes and phases which are not from particular modulation symbols.

Also selecting form symbols to be transmitted on the guard bands or non-symbols to be transmitted on the guard bands distinguishes from the prior art. E.g. Barandes et al. does not select from from symbols or non-symbols to be transmitted on the guard bands. "Non-Symbols" here means that just nothing is to be modulated onto the guard carrier.

With respect to what is to be transmitted by or to be modulated onto the guard carrier the following should be mentioned. The guard carrier will not be demodulated at the receiver side, therefore it actually does not matter what is modulated onto the guard carriers in the sense that the kind of data modulated onto the guard carrier are not relevant except for the fact that they are used to achieve e.g. a certain out of band interference at the receiver side. It therefore in this sense is not relevant what kind of data, information or signal is modulated onto the guard band. It should therefore be understood that if we speak of "symbols" carried by the guard band that this may refer to symbols in the sense of the symbol alphabet, which are used to be modulated onto the data carriers. However, also other symbols or signal values other than the ones contained in the modulation alphabet may be transmitted on the guard carriers. Moreover, it should be also noted that the modulation scheme used for the guard band, whether it is PSK, QAM, or any other scheme, does not matter, and it can be chosen differently from the one used in the transmission bandwidth, also typically the same modulation scheme may be used also for the guard band.

It should therefore be understood that if in the following reference is made to signal values transmitted on the guard band this may refer to symbols of the modulation alphabet, or to any other signal values, which may be transmitted over the guard band. Moreover, it should be understood that the term "symbol" used herein not necessarily refer to a symbol from the modulation alphabet but may refer to any signal value, which may be transmitted over the guard carrier.

According to one embodiment there is provided method for transmitting a signal in a communication system having a configured channel bandwidt wherein a transmission bandwidth and one or more guard bands are configured within said channel bandwidth. The guard bands are configured at frequencies below and/or above said transmission bandwidth. The signal to be transmitted is to fulfill predefined requirements, and said predefined requirements are defined as thresholds of maximum and/or minimum values in the frequency and/or time domain. The predefined requirements are defined for the transmission bandwidth for a specific service or user, and the requirements for said transmission bandwidth also apply to the guard bandwidth. Data symbols are carried by said transmission bandwidth, and symbols or no symbol are selected to be carried by said guard bands such that said signal does not exceed said thresholds.

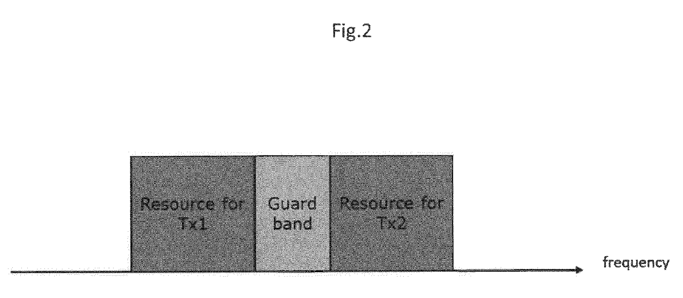

According to an embodiment of the invention there is provided a method for transmitting a multicarrier signal. For transmitting the multicarrier signal a frequency band (or frequency resource) is allocated for the multicarrier signal. The frequency band to be used for the signal transmission at least at one of its sides (above or below) has provided a guard band, as e.g. shown in Fig. 2, which e.g. shows the resource TX2 for transmitting the signal, and a guard band below. Even further below is a neighboring band for transmitting another signal TX1. A guard band may further be also allocated above the resource for TX2, although not shown in Fig. 2.

According to one embodiment not only the frequency resource has allocated carriers for transmission of data, but also the guard band has allocated guard subcarriers to it. Signal values are then modulated onto said the (one or more) guard subcarriers and transmitted over said guard band to lower the out of band emission of said multicarrier signal (X2 in Fig. 2) outside said frequency band allocated to said multicarrier signal. In other words, the out of band emission created by the signal TX2 transmitted in the neighboring band (or resource) provided for transmitting TX1 is to be lowered by appropriately choosing the signal values to be modulated onto and transmitted by the one or more guard subcarriers allocated to the guard band.

For that purpose the signal values transmitted over said guard subcarriers of said one or more guards band are chosen out of a limited set of discrete values. Each guard band (there may be more than one, although Fig. 2 shows only one) is respectively provided with such a limited set of discrete values.

According to one embodiment there is then calculated for each value of said limited set of discrete values resulting out of band emission when transmitting a certain set of data values over said multicarrier signal. In other words, assuming that a certain set of data values is to be transmitted as signal TX2, then given this set of data values there is calculated for each value of the limited set of discrete values of guard subcarriers the resulting out of band interference in the neighboring band to be used for transmitting TX1. If the guard band comprises more than one guard subcarriers, the calculation is done for each possible combination of guard carrier values.

Then there is chosen the value or combination of values among said limited set of discrete values for which said out of band emission of said multicarrier signal in the neighboring band (here the resource to be used for transmitting Tx2) reaches its minimum.

A method for transmitting a multicarrier signal, wherein frequency resource is allocated for data signal and for guard band wherein signals are transmitted on the guard band to lower the emission of said signal outside said frequency resource ensuring that the power density of the guard band shall not exceed certain thresholds.

According to one embodiment of the invention there is therefore provided a guard band with one or more guard subcarriers The signal transmitted on the guard subcarrier(s) is obtained by the selection of one value out of a predefined set (e.g. data modulation alphabet). Among the predefined set there is chosen a value for the guard subcarrier (or a set of values if there is more than one guard subcarrier) which minimizes the interference to the neighbouring transmission, i. e. the neighbouring frequency band.21

The proposed approach achieves low complexity side lobe suppression while at the same time avoiding power on the guard subcarrier higher than the power of data carrying subcarrier or any other predefined threshold. This additional feature of limitation of the transmit power comes at no additional cost as it is implicitly achieved by the proposed method appropriately providing the limited set of predefined discrete values.

In contrast to the prior art the technique is the same for any transmission bandwidth and no matrix inversion is needed to determine the cancellation subcarriers.

Furthermore, a filter applied after the IFFT can be easily considered in the calculation of the guard subcarrier.

According to one embodiment there is chosen a value out of a predefined set of possible, predefined values to be transmitted on the reserved guard subcarrier that reduces the sidelobes of the transmission to a certain value. By using only a predefined set of values the complexity of the approach can be significantly reduced compared to the approaches disclosed in the prior art. Rather than solving a complex optimization problem by complex mathematical optimization approaches, the values to be chosen for the guard carriers can just be calculated by a kind of "trial and error" approach, in which for all members of the predefined set of values the resulting OOB interference is calculated and then the member (or the members) of the set, for which the least OOB interference results, is chosen to be transmitted on the guard SC.

This predefined set can e.g. be the modulation alphabet applied for the data transmission. However, also any other set of values may be chosen. Preferably the set is chosen such that under the given computational power available the limited set still achieves an improvement compared to other approaches, where no limited set of values is given and a complex optimization approach would therefore be necessary. The skilled person may chose the predefined set accordingly.

One preferable such set would, e.g. the modulation alphabet. However, it may also be possible to choose a smaller set,. Which consists of only 4, or even only 2 possible values (in the latter case, e.g. zero and one other non-zero value).

The maximum absolute value of the values in this predefined set determines the maximum transmit power on the guard subcarrier. The maximum power of all symbols in the set determines the worst case transmit power on the guard subcarrier while the power on the data subcarrier remains the same. Therefore, by proper choice of the set, the transmit power can be limited very easily.

Furthermore, any other additional criteria other than lowering the sidelobes can be easily integrated to the present approach for selecting values for guard subcarrier, e.g. lowering peak-to-average-power-ratio, PAPR. This is not easily possible with any other prior art approaches for OOB interference reduction.

Furthermore, there is no additional signal processing needed at the receiver side compared to a system without the proposed method since the guard subcarrier can be simply ignored and do not need to be demodulated or decoded.

Even some distortion due to receive filtering, e.g. matched filter does not impact the effect of the guard subcarriers.

Also a combination of a zero guard subcarrier and one single guard subcarrier value is possible. This would reduce the complexity even further.

Further embodiments will now be described referring to the Figures.

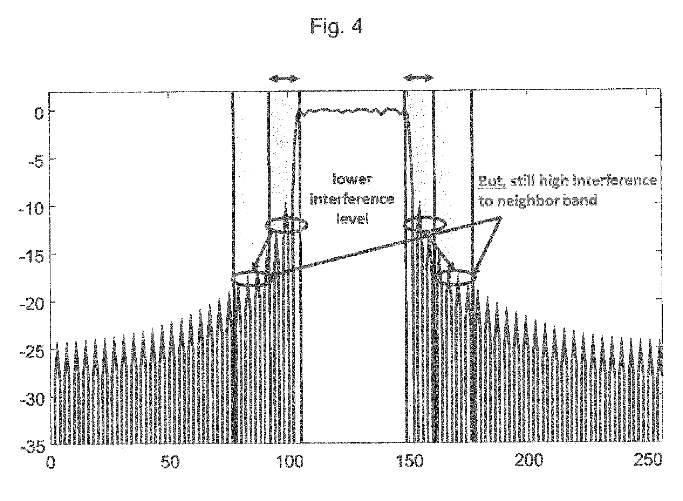

First of all, Figure 4 shows the power spectral density of an OFDM transmission including different regions, one is the data subcarrier region (the region in the center), one is the guard band region on both sides of the data transmission suffering from high interference and a certain part of the neighbor band that experiences lower interference, but still too high in many cases. This illustrates the problem to be solved by the present invention.

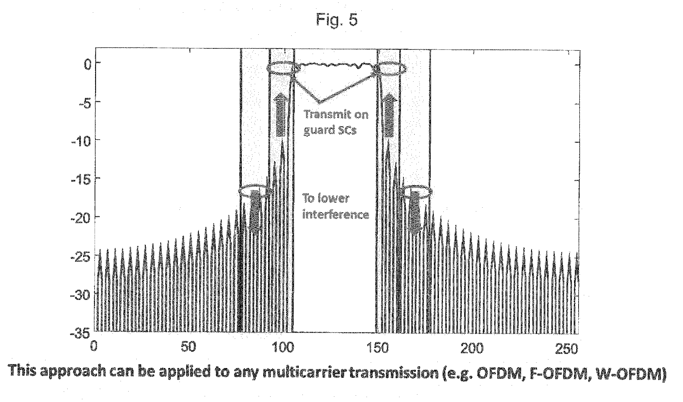

Figure 5 illustrates the power spectral density of an OFDM transmission including the three different regions, shown in Figure 4, but indicating that by transmitting a certain signal on the guard subcarrier leading to higher power spectral density (indicated by the upwardly directed arrows in the guard bands) PSD, in the guard region the PSD in the neighbor band can be lowered (indicated by the downwardly directed arrows in the neighboring data carrier band).

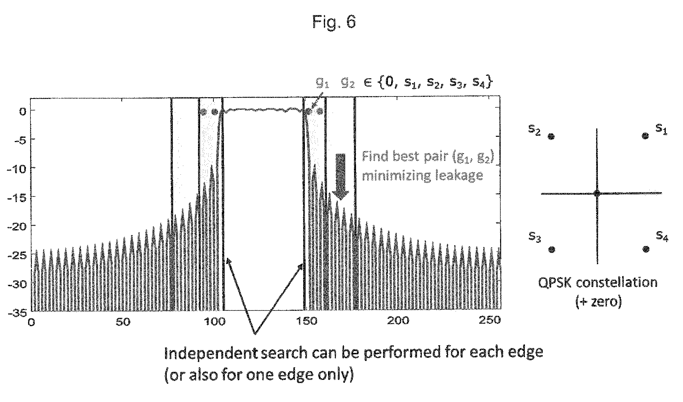

Figure 6 illustrates an example setup where two subcarriers g1 and g2 are supposed to carry a signal out of an example set that includes QPSK symbols as well as the value "0". The values out of this set should be chosen to minimize the leakage into the neighbor band region. For measuring the out of band emission or interference into the neighbor band, in this embodiment four subcarriers are used to measure the leakage into the neighboring band, e.g. by determining their PSD. One could also use more (or also less) subcarriers of the neighboring band for determining the out of band interference. It is, however, reasonable to consider only a part of the subcarriers of the neighboring band for the out of band emission determination, since the interference decreases with the subcarriers becoming more distant.

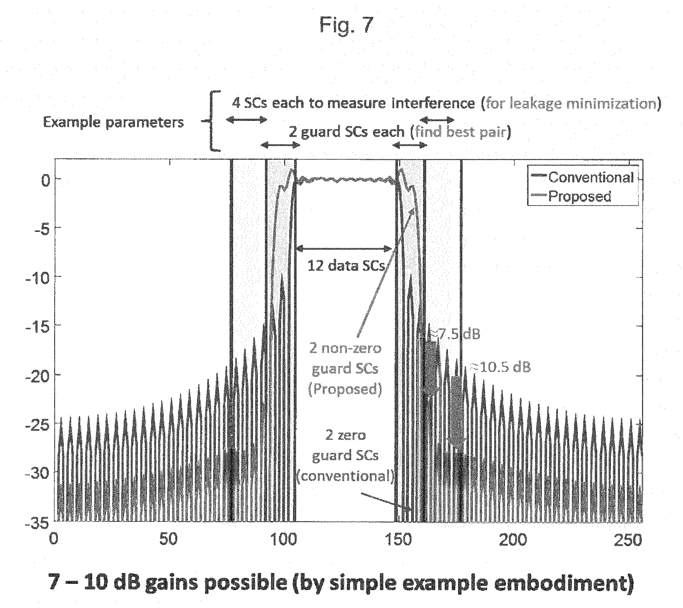

Figure 7 illustrates the resulting PSD of the example of the proposed method shown in Figure 6 illustrating the benefit in terms of lower leakage to the relevant neighbor band region, which has an example size of 2 SCs are used as guard carrying the selected values from the set and 12 SC are used for data transmission where the guard SCs are selected to minimize the leakage in 4 SCs immediately outside the guard.

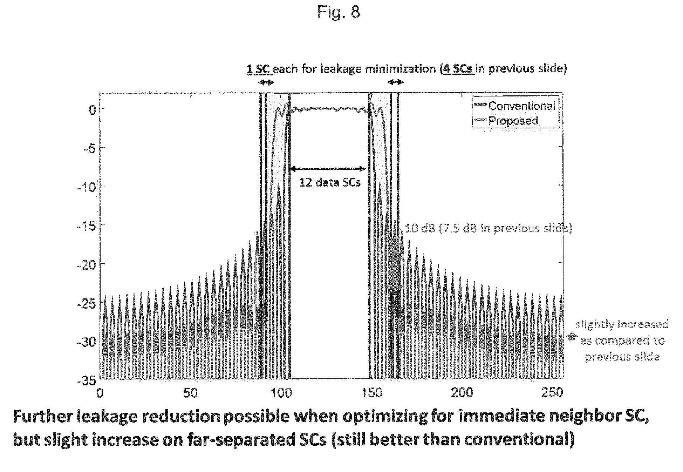

Figure 8 illustrates another example setting where the neighbor band region considered for the minimization of the leakage is smaller, i.e. 1 SC instead of 4 SCs and showing that the resulting PSD has a slightly different shape in terms of lower interference to the considered band but slightly higher interference to other SCs of the neighbor band.

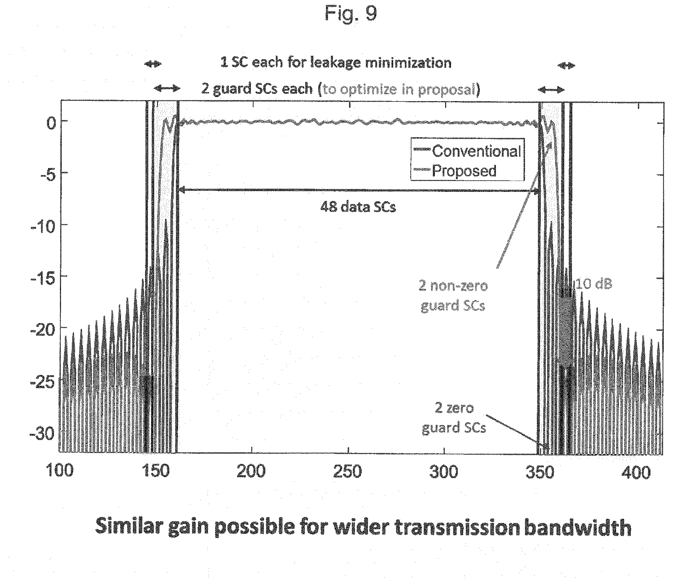

Figure 9 illustrates an embodiment with larger bandwidth of the data transmission illustrating that the method can be applied to any data transmission bandwidth.

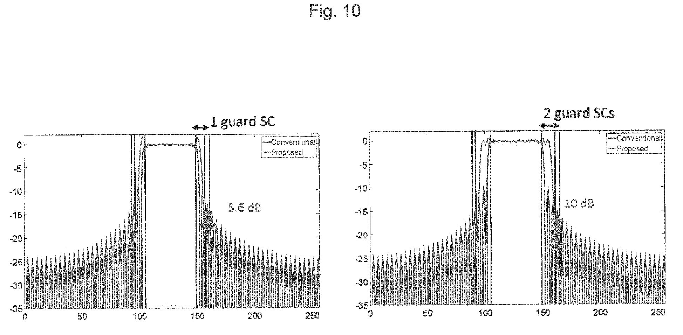

Figure 10 shows another embodiment, where only one SC is used as guard and is used to transmit the selected value illustrating that even with only 1 guard SC a significant OOB emission reduction can be achieved leading to lower complexity compared to cases with more guard SC.

It should be noted here that the approach proposed by the embodiments of the present invention breaks with a prejudice of the prior art, namely that the reduction of OOB interference is a problem, which requires a complex optimization approach in order to find the "real optimum solution" for the guard SC values. The present approach, however, leaves this prejudice behind and chooses a significantly different approach, which at a first glance appears to be disadvantageous, since it cannot lead to an optimum OOB interference reduction.

The inventors of the present invention, however, have recognized the surprising and non-obvious fact that in practical systems there is no need to perfectly suppress the interference to neighboring transmissions as long as it is sufficiently low, e.g. below noise level or other level, e.g. determined by the chosen modulation and coding scheme. With this flexibility to not force the interference to be zero at certain positions, the required OOB suppression can be achieved with the proposed method with much lower complexity compared to prior art.

The computational complexity is rather small and depends on the number of considered data subcarriers and the size of the set of possible values to be modulated on the data subcarrier and the number of guard subcarriers used to transmit values out of this set.

The method can be described with the following equations:

The digital transmit signal $X$ consists of the lower guard SCs $G_L$, the data carrying sybmols $D$ and the upper guard SCs $G_U$.

$$ X = [G_L D \ G_U] $$

$G_U$: Guard subcarriers of length $N_U$ on right side of the data carrying subcarriers

$G_L$: Guard subcarriers of length $N_L$ on left side of the data carrying subcarriers

The analog transmit signal $X(f)$ is the digital-to-analog converted (DAC) of the digital transmit signal X and the PSD of the transmit signal $PSD[X](f)$ is the squared of the absolute value of the analog transmit signal.

$$ X(f) = \mathrm{DAC}(X) $$

$$ \mathrm{PSD}[X](f) = |X(f)|^2 $$

The selection of the guard subcarrier values is described in the following for the upper guard band, but can be applied to the lower guard band in a similar way.

Choose the value of each of the guard subcarriers $G_U$ out of a set A to minimize the OOB emission (PSD at certain frequencies f within a certain range $\Omega_U$).

$$ G_U = \min_{[g \in A]^{N_U}} \mathrm{PSD}[X](f \in \Omega_U) $$

$\Omega_U$: Neighbourhood relevant for OOB suppression

A: Set of allowed complex signals on guard subcarrier

A possible choice of the set of allowed complex values is the modulation alphabet of the data subcarrier. Additionally also the value 0 can be included leading to a guard subcarrier not contributing to the overall power.

As will be recognized by the skilled person, any other set can be chosen. Thereby the values of the individual set may e.g. optimized to achieve best suppression results for a given set size.

Examples of preferable set sizes for sets of predefined values among which to choose are:

a set of two discrete values or less;

a set of four discrete values or less;

a set of eight discrete values or less;

a set of sixteen discrete values or less;

a set of 32 discrete values or less;

a set of 64 discrete values or less;

a set of 128 discrete values or less;

a set of 256 discrete values or less;

a set of 512 discrete values or less;

a set of 1024 discrete values or less;

the foregoing sets including the value of zero.

One other possible/preferable set, as mentioned, can be the modulation alphabet of the data subcarrier, possibly also including the value of zero.

According to one embodiment (which may be combined with any of the aforementioned embodiments) the value chosen among said limited set of discrete values is chosen such that the out of band emission in the neighboring frequency band to be used for transmitting data is minimized. This is to be understood such that a certain guard band corresponds to a certain frequency band to be used for transmitting data, and this frequency band has a neighboring frequency band to also to be used for transmitting u

The skilled person will further recognize that the concrete size of the set may be chosen depending on the circumstances such as the available computational power. If the computational power is relatively small, a smaller set should be chosen, if the computational power available is larger, a larger set may be chosen. The set, however, should not be chosen such large that the advantage of the limited, discrete set vanishes compare to the complex optimization approach using a non-discrete - non-limited set of possible values as disclosed in the prior art. The skilled person will be able to recognize this and will be able to choose the discrete, limited set of the present invention accordingly depending on the circumstances.

Furthermore it should be mentioned that the approaches shown in the prior art such as in Brandes et al. use computerized solutions for solving the optimization problems. While such a computerized solution due to its binary nature and its limited accuracy may in some sense also be regarded as offering only a "limited set of possible values, it should be mentioned here that such an interpretation would be awkward and would not at all correctly recognize the nature and the contribution of the present invention. Any computerized optimization approach disclosed in the prior art, even if due to its binary nature, offers only a limited set of possible solutions, the number of these solutions still would be in the range of more than ten thousands or millions. Such a number of "possible solutions" may not be equated with a "limited set of discrete values" as proposed by the present invention, not only because it already significantly differs just by the size of the numbers involves, but also because for the number of possible solutions disclosed in the prior art it is not possible to search the optimum solution just by "trying all of them". Also for this reason the approach proposed by the present invention is significantly different from the prior art approaches.

**Claims**

1. A method for transmitting a signal in a communication system, wherein

   - said signal is composed of first symbols transmitted on a transmission bandwidth and second symbols transmitted on one or more guard bandwidths,
   - said guard bandwidths are configured at frequencies below and/or above said transmission bandwidth,
   - said signal to be transmitted is to fulfill predefined requirements set for said transmission bandwidth, said guard bandwidth, and out of band,
   - said predefined requirements are defined as thresholds of maximum and/or minimum values on power density in the frequency and/or time domain,
   - said values are the same for said transmission bandwidth and said guard bandwidths,
   - said first symbols include data and/or pilot symbols, and
   - said second symbols are composed of arbitrary symbols and/or no symbols, such that said signal does not exceed said thresholds.

2. The method according to claim 1, wherein said predefined requirements are out of band emission requirement for said signal to be transmitted and are defined as the threshold values of power density.

3. The method according to one of the preceding claims, wherein a spectrum mask is defined over the transmission bandwith, the guard bandwidth and the out of band, which sets a maximum limit for the power spectrum density at the frequencies of the transmission bandwith, at the frequencies of the guard bandwith, and at the frequencies of the out of band.

4. The method for transmitting a signal according to one of the preceding claims, wherein said signal is a multicarrier signal,

   - wherein a frequency band is allocated for said multicarrier signal, and one or more guard bands are allocated at frequencies below and/or above said frequency band allocated for said multicarrier signal,
- wherein one or more guard subcarriers are respectively allocated to said one or more guard bands, and
- wherein signal values are modulated onto said one or more guard subcarriers and transmitted over said guard band to lower the out of band emission of said multicarrier signal outside said frequency band allocated to said multicarrier signal,
- wherein said signal values transmitted over said guard subcarriers of said one or more guards band are chosen out of a limited set of discrete values provided for each of said one or more guard bands, respectively; and said method further comprising:

- calculating for each value of said limited set of discrete values or, if said guard band comprises more than one subcarrier, for each combination of values of said limited set of discrete values provided for a certain guard band the resulting out of band emission when transmitting a certain set of data values over said multicarrier signal; and
- choosing the value or combination of values among said limited set of discrete values for which said out of band emission of said multicarrier signal reaches its minimum.

5. The method of one of the preceding claims, wherein said limited set of discrete values is chosen such that the power density of said out of band shall not exceed a certain threshold.

6. The method according to one of the preceding claims, wherein the threshold values of power density for out of band are signaled from network to UE.

7. The method according to one of the preceding claims, wherein said limited set of discrete values comprises one of the following:

a set comprising the modulation alphabet used for data symbols;
a set of two discrete values or less;
a set of four discrete values or less;
a set of eight discrete values or less;
a set of sixteen discrete values or less;

a set of 32 discrete values or less;
a set of 64 discrete values or less;
a set of 128 discrete values or less;
a set of 256 discrete values or less;
a set of 512 discrete values or less;
a set of 1024 discrete values or less;

the foregoing sets including the value of zero.

8. The method according to one of the preceding claims, further comprising:

calculating the out of band emission as the value of the power spectral density, and
choosing the value or values among said limited set of discrete values for which the power spectral density of the out of band emission is minimized.

9. The method according to one of the preceding claims, wherein only a part of the subcarriers in the neighboring band are used for calculating the resulting power spectral density of the out of band emission for a given value or combination of values for the guard carriers.

10. The method according to one of the preceding claims, further comprising:

signaling the number of guard subcarriers from the transmitter to the UE.

11. An apparatus for transmitting a signal in a communication system, wherein

- said signal is composed of first symbols transmitted on a transmission bandwidth and second symbols transmitted on one or more guard bandwidths,
- said guard bandwidths are configured at frequencies below and/or above said transmission bandwidth,
- said apparatus is configured such that signal to be transmitted is to fulfill predefined requirements set for said transmission bandwidth, said guard bandwidth, and out of band,
- said predefined requirements are defined as thresholds of maximum and/or minimum values on power density in the frequency and/or time domain,
- said values are the same for said transmission bandwidth and said guard bandwidths,
- said first symbols include data and/or pilot symbols, and
- said second symbols are composed of arbitrary symbols and/or no symbols, such that said signal does not exceed said thresholds.

12. The apparatus of claim 11 for transmitting a multicarrier signal, comprising:

- a frequency allocator for allocating a frequency band for said multicarrier signal, and for allocating one or more guard bands at frequencies below and/or above said frequency band allocated for said multicarrier signal,
- wherein one or more guard subcarriers are respectively allocated to said one or more guard bands, and
- a modulator and transmitter for modulating signal values onto said one or more guard subcarriers and transmitting them over said guard band to lower the out of band emission of said multicarrier signal outside said frequency band allocated to said multicarrier signal, and
- a processor for
- choosing said signal values transmitted over said guard subcarriers of said one or more guards band out of a limited set of discrete values provided for each of said one or more guard bands, respectively; and said processor further being adapted for:

- calculating for each value of said limited set of discrete values or, if said guard band comprises more than one subcarrier, for each combination of values of said limited set of discrete values provided for a certain guard band the resulting out of band emission when transmitting a certain set of data values over said multicarrier signal; and
- choosing the value or combination of values among said limited set of discrete values for which said out of band emission of said multicarrier signal reaches its minimum.

13. The apparatus of claim 11 or 12, further comprising means or modules for carrying out a method according to one of claims 1 to 10.

Fig.1

e.g. filtering for F-OFDM/ UF-OFDM, windowing for W-OFDM

guard band added

Resource allocation

guard band added

IFFT

P/S

CP / ZP added

Optional processing

Channel

to a receiver

from other (async) transmitters

Fig.2

frequency

Fig. 3

Broadband synchronized communications     Guard SCs not important

IoT/MTC asynchronous communications     Guard SCs needed to lower interference to neighbor band

Also mixed numerologies for coexistence of broadband and IoT/MTC

Fig. 4

Fig. 5

This approach can be applied to any multicarrier transmission (e.g. OFDM, F-OFDM, W-OFDM)

Fig. 6

Independent search can be performed for each edge
(or also for one edge only)

## Fig. 7

7 – 10 dB gains possible (by simple example embodiment)

Fig. 8

**Further leakage reduction possible when optimizing for immediate neighbor SC, but slight increase on far-separated SCs (still better than conventional)**

Fig. 9

Similar gain possible for wider transmission bandwidth

Fig. 10

Fig. 11

Figure 12

Europäisches Patentamt

European Patent Office

Office européen des brevets

# EUROPEAN SEARCH REPORT

Application Number

EP 16 18 3627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BRANDES S ET AL: "Sidelobe suppression in OFDM systems by insertion of cancellation carriers", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 1, 28 September 2005 (2005-09-28), pages 152-156, XP010878440, DOI: 10.1109/VETECF.2005.1557490 ISBN: 978-0-7803-9152-9 * paragraph [00II] - paragraph [0III] * ----- | 1-13 | INV. H04L25/03 H04L27/26 |

TECHNICAL FIELDS SEARCHED (IPC)

H04L

The present search report has been drawn up for all claims

| Place of search | Date of completion of the search | Examiner |
|---|---|---|
| Berlin | 28 February 2017 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8798558 B2

- DE 102006017636 B4

**Non-patent literature cited in the description**

- **JIAN A. ZHANG ; Y. JAY GUO.** Out-of-Band Emission Reduction and a Unified Framework for Precoded OFDM. *IEEE Communications Magazine,* June 2015

- **BRANDES et al.** Reduction of Out-of-Band Radiation in OFDM Systems by Insertion of Cancellation Carriers. *IEEE COMMUNICATIONS LETTERS,* June 2006, vol. 10 (6